# FASCICULE DE BREVET EUROPEEN

(11) **EP 4 129 827 B1**
(45) Date de publication et mention de la délivrance du brevet: **11.06.2025**
(21) Numéro de dépôt: 22181719.0
(22) Date de dépôt: 29.06.2022
(51) Int. Cl.: B64D 37/30, B64D 37/32, B64D 37/34

(54) **AÉRONEF COMPRENANT AU MOINS UN DISPOSITIF D ALIMENTATION EN HYDROGÈNE AINSI QU AU MOINS UN CONTENANT ÉTANCHE DANS LEQUEL EST POSITIONNÉ AU MOINS UN ÉQUIPEMENT DUDIT DISPOSITIF D ALIMENTATION EN HYDROGÈNE**
LUFTFAHRZEUG MIT MINDESTENS EINER VORRICHTUNG ZUR WASSERSTOFFVERSORGUNG SOWIE MINDESTENS EINEM DICHTEN BEHÄLTER, IN DEM MINDESTENS EIN AUSRÜSTUNGSTEIL DER VORRICHTUNG ZUR WASSERSTOFFVERSORGUNG POSITIONIERT IST
AIRCRAFT INCLUDING AT LEAST ONE DEVICE FOR SUPPLYING HYDROGEN AND AT LEAST ONE SEALED CONTAINER IN WHICH IS POSITIONED AT LEAST ONE PIECE OF EQUIPMENT OF SAID DEVICE FOR SUPPLYING HYDROGEN

(30) Priorité: 03.08.2021 FR 2108415
(43) Date de publication de la demande: 08.02.2023
(73) Titulaire: Airbus (S.A.S.), 31700 Blagnac (FR); Airbus Operations (S.A.S.), 31060 Toulouse Cedex 9 (FR)
(72) Inventeur: CZAPLA, Lionel, 31060 TOULOUSE (FR); FORBES, Alistair, 31060 TOULOUSE (FR); PISSAVIN, Alexis, 31700 BLAGNAC (FR)
(74) Mandataire: Jardel, Marc Henry Philippe

(56) Documents cités:
- EP-A1- 4 056 477
- EP-A1- 4 130 635
- EP-B1- 2 622 255
- EP-B1- 2 644 508
- GB-A- 2 587 560
- GB-A- 899 312
- US-A1- 2015 344 145

## Description

La présente demande se rapporte à un aéronef comprenant au moins un dispositif d'alimentation en hydrogène ainsi qu'au moins un contenant étanche à l'air extérieur audit contenant dans lequel est positionné au moins un équipement du dispositif d'alimentation en hydrogène.

Selon un mode de réalisation, un aéronef comprend plusieurs moteurs à hélice fonctionnant à l'hydrogène ainsi qu'au moins un dispositif d'alimentation en hydrogène configuré pour alimenter les moteurs.

Ce dispositif d'alimentation en hydrogène comprend un réservoir d'hydrogène positionné dans le fuselage de l'aéronef, une pompe haute pression pour mettre en pression l'hydrogène, un échangeur thermique configuré pour réchauffer l'hydrogène qui passe de l'état liquide à l'état gazeux ainsi que différents conduits pour relier le réservoir d'hydrogène, la pompe, l'échangeur thermique et le moteur.

Les conduits sont des tuyaux à double peau pour empêcher toute fuite d'hydrogène.

La conception d'un échangeur thermique ou d'une pompe à haute pression présentant un niveau de sécurité élevé en matière de fuite d'hydrogène s'avère complexe ou conduit à des coûts élevés pour ces équipements.

Le document GB899312 décrit un moteur à turbine à gaz ayant des moyens de stockage d'un combustible cryogénique et des moyens d'utilisation d'une partie du combustible cryogénique comme refroidisseur indirect pour la turbine. Une canalisation d'hydrogène circule depuis les moyens de stockage, jusque dans le moteur, en passant par un échangeur de chaleur, sans contenant étanche permettant d'isoler ladite canalisation de l'air extérieur.

Le document US2015/344145 décrit un aéronef comprenant un moteur à turbine ayant une conduite de sortie d'air de prélèvement, un système de carburant cryogénique ayant un réservoir de carburant cryogénique et une conduite d'alimentation couplant de manière fonctionnelle ledit réservoir au moteur à turbine, et un système de génération de gaz inerte embarqué couplé fluidiquement à la sortie d'air prélevé et ayant une conduite de sortie d'air riche en azote et une conduite de sortie d'air riche en oxygène.

Le document GB2587560 décrit l'utilisation de l'hydrogène dans un aéronef afin de réduire les émissions de polluants.

Le document EP4056477 décrit un aéronef comprenant un moteur fonctionnant à l'hydrogène et présentant une canalisation à double peau dans laquelle circule de l'hydrogène.

Le document EP2644508 décrit un aéronef comprenant un système de refroidissement d'un composant électronique, ledit système de refroidissement comprenant un réservoir de carburant et une conduite de transport du carburant contenu dans le réservoir vers un moteur de l'aéronef, ladite conduite étant isolée thermiquement sur une partie de sa longueur.

La présente invention vise à remédier à tout ou partie des inconvénients de l'art antérieur.

A cet effet, l'invention a pour objet un aéronef comprenant au moins un moteur à hydrogène ainsi qu'au moins un dispositif d'alimentation en hydrogène comportant au moins un réservoir d'hydrogène et au moins un équipement traversé par l'hydrogène et positionné entre le réservoir d'hydrogène et le moteur à hydrogène.

Selon l'invention, l'aéronef comprend au moins un contenant étanche à l'air extérieur audit contenant, dans lequel est positionné l'équipement ou au moins un des équipements du dispositif d'alimentation en hydrogène.

Le fait de positionner le ou les équipements du dispositif d'alimentation en hydrogène dans au moins un contenant étanche à l'air extérieur audit contenant (et donc renfermant une faible teneur en oxygène) permet d'obtenir une installation d'hydrogène sûre en utilisant des équipements existants.

Selon une autre caractéristique, le contenant étanche ou au moins un des contenants étanches comprend au moins un raccord configuré pour connecter un appareil d'injection d'un gaz inerte ou un appareil de tirage au vide.

Le contenant étanche ou au moins un des contenants étanches comprend au moins un capteur d'oxygène configuré pour détecter une présence d'oxygène ou une concentration donnée d'oxygène à l'intérieur du contenant étanche. Selon une autre caractéristique, le contenant étanche ou au moins un des contenants étanches comprend au moins un capteur d'hydrogène configuré pour détecter une présence d'hydrogène ou une concentration donnée d'hydrogène à l'intérieur du contenant étanche.

Le contenant étanche ou au moins un des contenants étanches comprend au moins un système d'extraction configuré pour extraire l'oxygène présent dans le contenant étanche. Selon une autre caractéristique, le contenant étanche ou au moins un des contenants étanches comprend au moins un système d'extraction configuré pour extraire l'hydrogène présent dans le contenant étanche.

Le dispositif d'alimentation en hydrogène comprend au moins un système de raccordement démontable en amont ou en aval du contenant étanche ou d'au moins un des contenants étanches.

Selon une autre caractéristique, le dispositif d'alimentation en hydrogène comprend au moins une vanne en amont ou en aval du contenant étanche ou d'au moins un des contenants étanches.

Selon une autre caractéristique, l'aéronef comprend au moins une structure et le contenant étanche ou au moins un des contenants étanches est un boîtier étanche distinct de ladite structure de l'aéronef, l'aéronef comprenant au moins un système de liaison reliant le boîtier étanche et ladite structure de l'aéronef.

Selon une autre caractéristique, l'aéronef comprend une voilure présentant plusieurs caissons, le boîtier étanche ou au moins un des boîtiers étanches étant positionné dans un des caissons de la voilure.

Selon une autre caractéristique, l'aéronef comprend au moins une structure et le contenant étanche ou au moins un des contenants étanches est au moins en partie délimité par ladite structure de l'aéronef.

Selon une autre caractéristique, l'aéronef comprend une voilure présentant plusieurs caissons, le contenant étanche ou au moins un des contenants étanches étant délimité par au moins une partie d'un des caissons de la voilure et au moins une cloison d'étanchéité.

Selon une autre caractéristique, la voilure comprend des parois supérieure et inférieure, des longerons avant et arrière ainsi que des nervures délimitant les caissons de la voilure. En complément, au moins une paroi parmi les parois supérieure et inférieure comprend, au droit d'au moins un équipement ou d'au moins un boîtier étanche, une ouverture obturée de manière étanche par une trappe démontable.

Selon une autre caractéristique, le au moins un équipement du dispositif d'alimentation en hydrogène est une pompe ou un échangeur thermique.

Selon une autre caractéristique, le dispositif d'alimentation en hydrogène comporte une pluralité d'équipements traversés par l'hydrogène et positionnés entre le réservoir d'hydrogène et le moteur à hydrogène, ladite pluralité d'équipements étant disposée dans ledit au moins un contenant étanche.

Selon une autre caractéristique, le dispositif d'alimentation en hydrogène comporte une pluralité d'équipements traversés par l'hydrogène et positionnés entre le réservoir d'hydrogène et le moteur à hydrogène, et l'aéronef comprend une pluralité de contenants étanches à l'air extérieur audit contenant, dans chaque contenant étanche étant positionné au moins un des équipements du dispositif d'alimentation en hydrogène.

D'autres caractéristiques et avantages ressortiront de la description de l'invention qui va suivre, description donnée à titre d'exemple uniquement, en regard des dessins annexés parmi lesquels :
Fig. 1 est une vue en perspective d'un aéronef,
Fig. 2 est une représentation schématique d'un moteur à hélice et d'un dispositif d'alimentation en hydrogène illustrant un mode de réalisation de l'invention,
Fig. 3 est une vue en perspective d'un contenant étanche dans lequel sont positionnés un échangeur thermique et une pompe illustrant un mode de réalisation de l'invention,
Fig. 4 est une vue en perspective d'un premier contenant étanche dans lequel est positionnée une pompe et d'un deuxième contenant étanche dans lequel est positionné un échangeur thermique illustrant un deuxième mode de réalisation de l'invention,
Fig. 5 est une représentation schématique d'une partie d'une aile d'aéronef comportant au moins un caisson étanche,
Fig. 6 est une coupe transversale d'un caisson d'une aile d'aéronef étanche dans lequel sont positionnés une pompe et un échangeur thermique illustrant un mode de réalisation de l'invention,
Fig. 7 est une coupe transversale d'un caisson d'une aile d'aéronef cloisonné de manière étanche dans lequel sont positionnés une pompe et un échangeur thermique illustrant un mode de réalisation de l'invention,
Fig. 8 est une vue de dessus d'une partie d'une aile d'aéronef illustrant un premier agencement de l'invention,
Fig. 9 est une vue de dessus d'une partie d'une aile d'aéronef illustrant un deuxième agencement de l'invention,
Fig. 10 est une vue de dessus d'une partie d'une aile d'aéronef illustrant un troisième agencement de l'invention,
Fig. 11 est une coupe transversale d'un caisson d'une aile d'aéronef dans lequel est positionné un boîtier étanche illustrant un mode de réalisation de l'invention,
Fig. 12 est une vue de dessus de l'aile visible sur la figure 11, en l'absence de trappe,
Fig. 13 est une représentation schématique d'un système de fixation du boîtier étanche visible sur la figure 11 illustrant un mode de réalisation de l'invention,
Fig. 14 est une coupe transversale d'un caisson d'une aile d'aéronef dans lequel est positionné un boîtier étanche illustrant un autre mode de réalisation de l'invention,
Fig. 15 est une coupe transversale d'un caisson d'une aile d'aéronef dans lequel sont positionnés deux boîtiers étanches illustrant un autre mode de réalisation de l'invention,
Fig. 16 est une représentation schématique latérale d'un ensemble propulsif sans capot et d'un boîtier étanche positionné sous l'aile illustrant un autre mode de réalisation de l'invention,
Fig. 17 est une coupe transversale d'une aile d'aéronef et d'un boîtier étanche positionné sous l'aile illustrant un autre mode de réalisation de l'invention,
Fig. 18 est une représentation schématique d'un ensemble propulsif illustrant un autre mode de réalisation de l'invention.

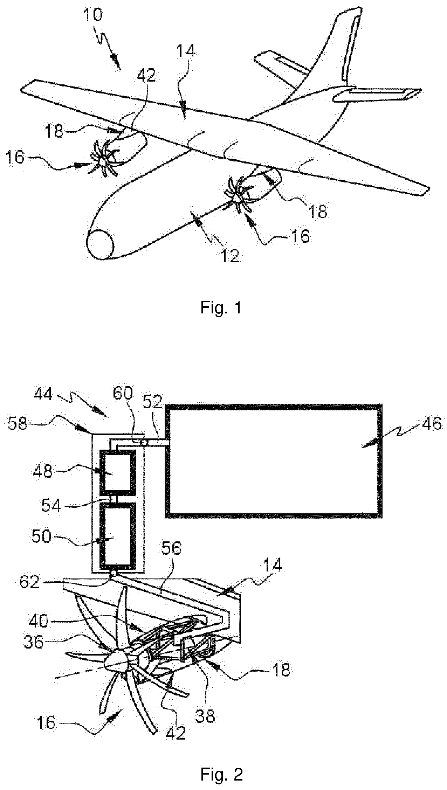

Selon un mode de réalisation visible sur la figure 1, un aéronef 10 comprend un fuselage 12, une voilure 14 ainsi que des ensembles propulsifs 16 positionnés sous la voilure 14 et reliés chacun à cette dernière par un mât 18.

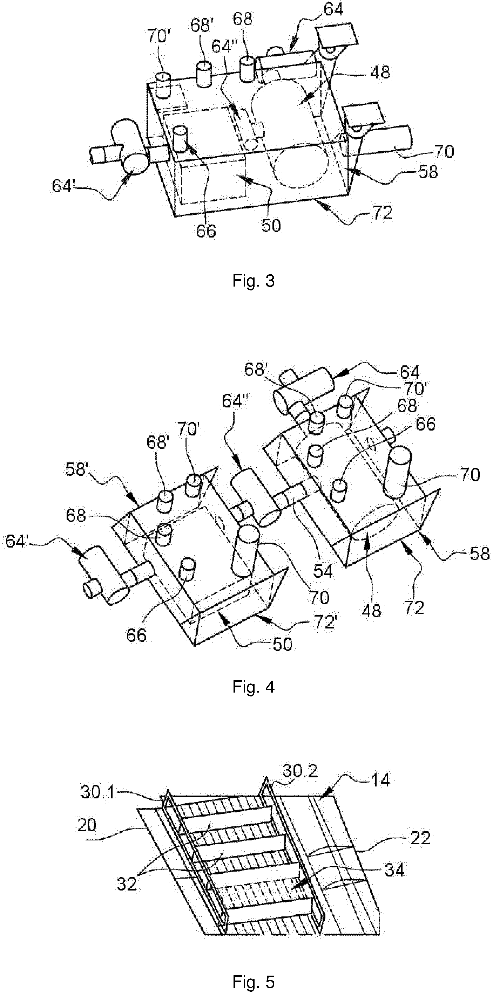

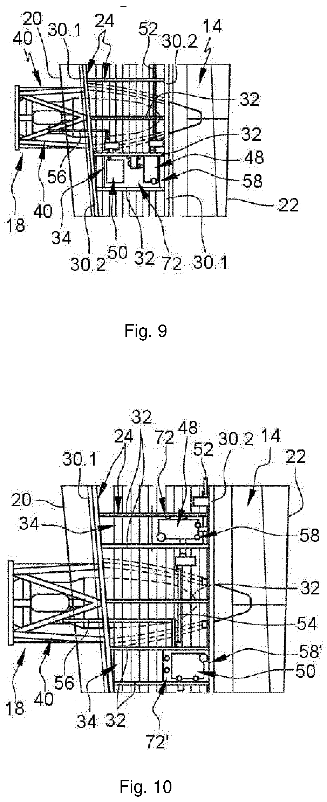

Selon un mode de réalisation visible notamment sur les figures 5 à 11, la voilure 14 s'étend entre un bord d'attaque 20 et un bord de fuite 22, présente une structure 24 qui comprend une paroi supérieure 26, une paroi inférieure 28, un longeron avant 30.1, parallèle au bord d'attaque 20, positionné à proximité de ce dernier et reliant les parois supérieure et inférieure 26, 28, un longeron arrière 30.2, parallèle au longeron avant 30.1, positionné à proximité du bord de fuite 22 et reliant les parois supérieure et inférieure 26, 28 ainsi que des nervures 32 positionnées dans des plans perpendiculaires aux longerons avant et arrière 30.1, 30.2 et reliant les parois supérieure et inférieure 26, 28.

Selon cette configuration, la voilure 14 comprend une pluralité de caissons 34 délimités par les parois supérieure et inférieure 26, 28, les longerons avant et arrière 30.1, 30.2 ainsi que les nervures 32.

Selon un mode de réalisation, chaque ensemble propulsif 16 comprend une hélice de propulsion 36 ainsi qu'un moteur à hydrogène 38 entraînant en rotation l'hélice de propulsion 36.

Selon une configuration, le mât 18 comprend une structure primaire 40 reliant l'ensemble propulsif 16 et la voilure 14 ainsi qu'une structure secondaire 42 enveloppant la structure primaire 40 pour conférer au mât 18 des performances aérodynamiques.

Comme illustré sur la figure 2, l'aéronef 10 comprend, pour chaque ensemble propulsif 16, un dispositif d'alimentation en hydrogène 44 présentant au moins un réservoir d'hydrogène 46 positionné dans le fuselage 12, une pompe 48 pour mettre en pression l'hydrogène, un échangeur thermique 50 configuré pour réchauffer l'hydrogène ainsi que des conduits d'hydrogène reliant le réservoir d'hydrogène 46, la pompe 48, l'échangeur thermique 50 et le moteur à hydrogène 38. Selon une configuration, le dispositif d'alimentation en hydrogène 44 comprend un premier conduit d'hydrogène 52 reliant le réservoir d'hydrogène 46 et la pompe 48, un deuxième conduit d'hydrogène 54 reliant la pompe 48 et l'échangeur thermique 50 ainsi qu'un troisième conduit d'hydrogène 56 reliant l'échangeur thermique 50 et le moteur à hydrogène 38.

Le réservoir d'hydrogène 46 peut être commun à plusieurs ensembles propulsifs 16. Selon une configuration, la pompe 48 est une pompe à haute pression. L'échangeur thermique 50 est configuré pour réchauffer l'hydrogène afin d'obtenir un passage de l'état liquide à l'état gazeux pour l'hydrogène. Les conduits d'hydrogène 52, 54, 56 sont des tuyaux (ou conduits) à doubles peaux.

Selon une configuration, la pompe 48 et l'échangeur thermique 50 sont disposés à proximité du moteur à hydrogène 38. Selon cette configuration, la distribution de l'hydrogène du réservoir d'hydrogène 46 au moteur à hydrogène 38 est réalisée avec l'hydrogène à l'état liquide. L'échangeur thermique 50 à proximité du moteur à hydrogène 38 réchauffe l'hydrogène pour le faire passer de l'état liquide à l'état gazeux.

Selon une autre configuration, la pompe 48 est disposée à proximité du réservoir d'hydrogène 46 et l'échangeur thermique 50 est disposé à proximité du moteur à hydrogène 38. Selon cette configuration, la distribution de l'hydrogène du réservoir d'hydrogène 46 au moteur à hydrogène 38 est réalisée avec l'hydrogène à l'état liquide. L'échangeur thermique 50 à proximité du moteur à hydrogène 38 réchauffe l'hydrogène pour le faire passer de l'état liquide à l'état gazeux.

Selon une autre configuration, la pompe 48 et l'échangeur thermique 50 sont disposés à proximité du réservoir d'hydrogène 46. Selon cette configuration, la distribution de l'hydrogène du réservoir d'hydrogène 46 au moteur à hydrogène 38 est réalisée avec l'hydrogène à l'état gazeux. Un échangeur thermique additionnel (non représenté sur les figures) est disposé à proximité du moteur à hydrogène 38, et est configuré pour réchauffer l'hydrogène gazeux, avant son entrée dans le moteur à hydrogène 38.

L'aéronef 10 comprend au moins un contenant étanche 58 dans lequel est positionné au moins un équipement parmi la pompe 48 et l'échangeur thermique 50 du dispositif d'alimentation en hydrogène 44.

Selon un premier mode de réalisation visible par exemple sur les figures 2 et 3, l'aéronef 10 comprend un contenant étanche 58 dans lequel sont positionnés la pompe 48 et l'échangeur thermique 50. Le contenant étanche 58 comprend un orifice de passage amont 60 pour le premier conduit d'hydrogène 52 et un orifice de passage aval 62 pour le troisième conduit d'hydrogène 56.

Selon une première configuration, les premier et troisième conduits d'hydrogène 52, 56 traversent les orifices de passage amont et aval 60, 62 et sont reliés de manière étanche avec le contenant étanche 58.

Selon une autre configuration, au moins un conduit d'hydrogène parmi les premier et troisième conduits d'hydrogène 52, 56 comprend un tronçon extérieur positionné à l'extérieur du contenant étanche 58, un tronçon intérieur positionné à l'intérieur du contenant étanche 58 ainsi qu'un système de raccordement démontable reliant les tronçons extérieur et intérieur et positionné au droit de l'orifice de passage amont ou aval 60, 62 ou légèrement décalé vers l'extérieur du contenant étanche 58. Selon un agencement, le dispositif d'alimentation comprend deux systèmes de raccordement démontables en amont et en aval du contenant étanche 58. Ainsi, il est possible de désolidariser le contenant étanche 58 et les éléments positionnés à l'intérieur du reste du dispositif d'alimentation en hydrogène 44.

Selon une configuration, le dispositif d'alimentation en hydrogène 44 comprend au moins une vanne 64 en amont ou en aval du contenant étanche 58, positionnée sur l'un des conduits d'hydrogène 52, 54, 56 et configurée pour occuper un état passant dans lequel elle autorise un écoulement de l'hydrogène dans le conduit d'hydrogène et un état bloqué dans lequel elle empêche un écoulement de l'hydrogène dans le conduit d'hydrogène. Selon un agencement, le dispositif d'alimentation en hydrogène 44 comprend deux vannes 64, 64' en amont et en aval du contenant étanche 58. Ainsi, il est possible d'isoler les éléments positionnés à l'intérieur du contenant étanche 58 du reste du dispositif d'alimentation en hydrogène 44. Selon une configuration, une autre vanne 64" est positionnée à l'intérieur du contenant étanche 58 entre la pompe 48 et l'échangeur thermique 50.

Selon un deuxième mode de réalisation visible par exemple sur la figure 4, l'aéronef 10 comprend un premier contenant étanche 58 dans lequel est positionnée la pompe 48 ainsi qu'un deuxième contenant étanche 58' dans lequel est positionné l'échangeur thermique 50. Selon ce mode de réalisation, la pompe 48 et l'échangeur thermique 50 sont positionnés dans deux contenants étanches 58, 58' distincts. Chaque contenant étanche 58, 58' comprend un orifice de passage amont 60 et un orifice de passage aval 62 pour les conduits d'hydrogène 52, 54, 56.

Comme pour le premier mode de réalisation, le dispositif d'alimentation en hydrogène 44 comprend au moins un système de raccordement démontable et/ou au moins une vanne 64 en amont et/ou en aval d'au moins un contenant étanche parmi les premier et deuxième contenants étanches 58, 58'. Selon une configuration, une première vanne 64 est agencée en amont du premier contenant étanche 58, une deuxième vanne 64' est agencée en aval du deuxième contenant 58' et une troisième vanne 64" est agencée entre les premier et deuxième contenants étanches 58, 58'.

Au moins l'un des contenants étanches 58, 58' comprend au moins un raccord 66 configuré pour connecter un appareil d'injection d'un gaz inerte ou un appareil de tirage au vide pour extraire le gaz présent dans le contenant étanche 58, 58'. Cette solution permet de retirer l'oxygène présent dans le contenant étanche 58, 58' en remplaçant le gaz présent dans le contenant étanche 58, 58' par un gaz inerte ou en le retirant pour obtenir un vide à l'intérieur du contenant étanche 58, 58'.

Selon un mode de réalisation, au moins l'un des contenants étanches 58, 58' comprend au moins un capteur 68 configuré pour détecter l'oxygène ou l'hydrogène présent dans le contenant étanche 58, 58'. Selon une configuration, chaque contenant étanche 58, 58' comprend un premier capteur d'oxygène 68 permettant de détecter la présence d'oxygène ou une concentration donnée d'oxygène à l'intérieur du contenant étanche 58, 58' ainsi qu'un deuxième capteur d'hydrogène 68' configuré pour détecter la présence d'hydrogène ou une concentration donnée d'hydrogène à l'intérieur du contenant étanche 58, 58'.

Selon un mode de réalisation, au moins l'un des contenants étanches 58, 58' comprend au moins un système d'extraction 70 configuré pour retirer l'oxygène ou l'hydrogène présent à l'intérieur du contenant étanche 58, 58'. Selon une configuration, chaque contenant étanche 58, 58' comprend un premier système d'extraction 70 configuré pour extraire l'oxygène présent dans le contenant étanche 58, 58', par exemple lorsque le premier capteur 68 détecte la présence d'oxygène dans le contenant étanche 58, 58'. Chaque contenant étanche 58, 58' comprend un deuxième système d'extraction 70' configuré pour extraire l'hydrogène présent dans le contenant étanche 58, 58', par exemple lorsque le deuxième capteur 68' détecte une concentration d'hydrogène dans le contenant étanche 58, 58' supérieure à un seuil donné.

Selon un premier mode de réalisation, le contenant étanche 58 ou au moins l'un des contenants étanches 58, 58' est un boîtier étanche 72 distinct de la structure de l'aéronef, comme illustré sur les figures 3, 4, 11, 13 à 18.

A titre d'exemple, le boîtier étanche 72 est parallélépipédique.

Selon une configuration, le boîtier étanche 72 comprend aux moins deux parties reliées entre elles de manière étanche et démontable pour permettre un accès à l'intérieur du boîtier étanche 72. A titre d'exemple, le boîtier étanche 72 comprend une première partie présentant un fond et quatre parois latérales ainsi qu'une deuxième partie sous la forme d'un couvercle configuré pour être relié de manière étanche et démontable aux parois latérales de la première partie. Bien entendu, l'invention n'est pas limitée à ce mode de réalisation pour le boîtier étanche 72.

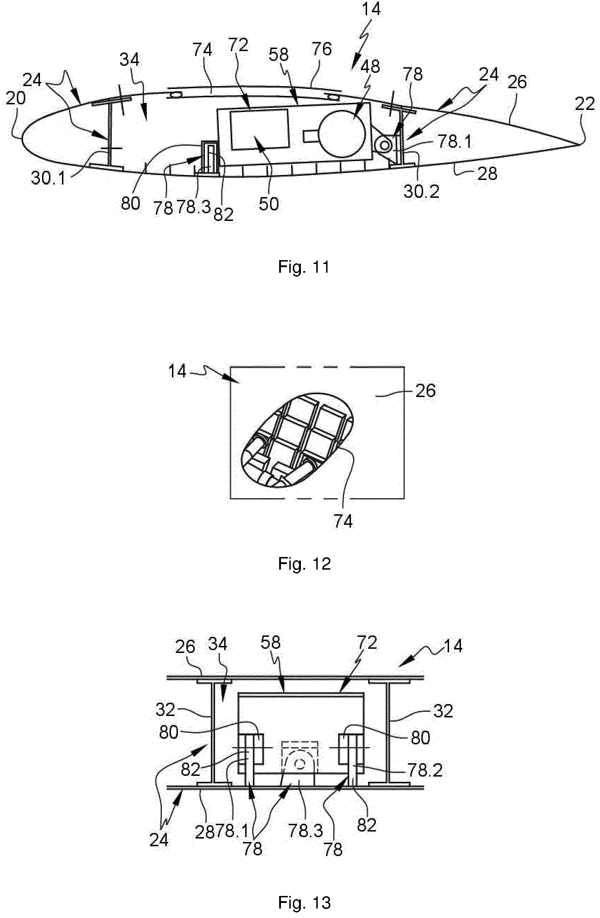

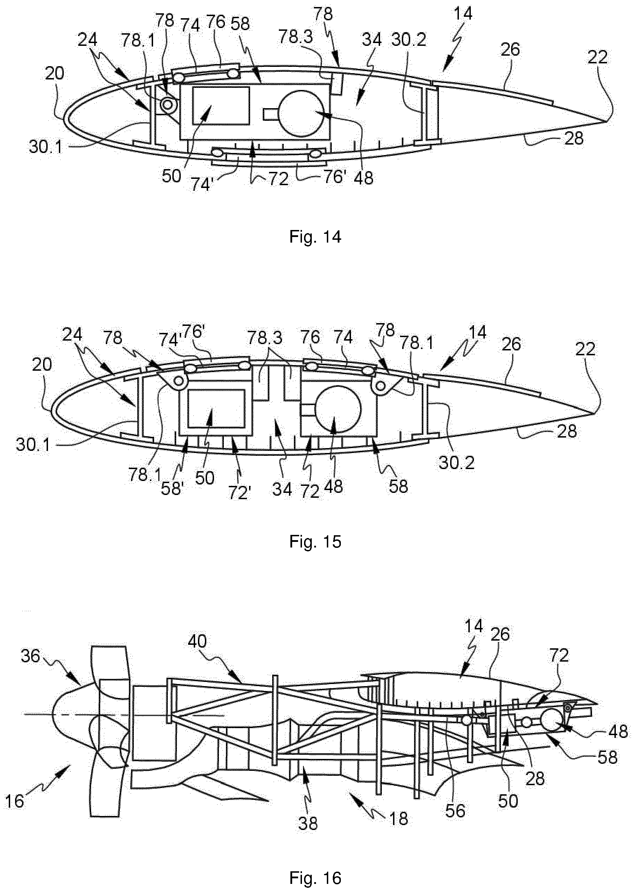

Selon un premier agencement visible sur les figures 11, 13 et 14, la pompe 48 et l'échangeur thermique 50 sont positionnés dans le même boîtier étanche 72 positionné dans un des caissons 34 de la voilure 14. Sur la figure 11, le boîtier étanche 72 est agencé dans une partie arrière de la voilure 14 (à proximité du longeron arrière 30.2, et du bord de fuite 22). Sur la figure 14, le boîtier étanche 72 est agencé dans une partie avant de la voilure 14 (à proximité du longeron avant 30.1, et du bord d'attaque 20).

Selon un deuxième agencement visible sur la figure 15, la pompe 48 est positionnée dans un premier boîtier étanche 72 positionné dans un premier caisson 34 de la voilure et l'échangeur thermique 50 est positionné dans un deuxième boîtier étanche 72' positionné dans le premier caisson 34 de la voilure. Le premier boîtier étanche 72 est ici positionné dans une partie arrière de la voilure 14 (à proximité du longeron arrière 30.2), tandis que le deuxième boîtier étanche 72' est agencé dans une partie avant de la voilure 14 (à proximité du longeron avant 30.1). Bien entendu, cette configuration n'est pas limitative. Bien que non représenté, l'échangeur thermique 50 peut être positionné dans un deuxième boîtier étanche 72' dans un deuxième caisson 34, distinct du premier caisson 34. Le caisson 34 dans lequel est positionné au moins un boîtier étanche 72, 72' est situé le plus proche possible de la structure primaire 40. Le caisson 34 dans lequel est positionné au moins un boîtier étanche 72, 72' peut être étanche ou non.

Selon une configuration, au moins une paroi parmi les parois supérieure et inférieur 26, 28 comprend au moins une ouverture 74 (visible sur la figure 12), au droit d'au moins un boîtier étanche 72, obturée de manière étanche par une trappe 76 démontable. Selon le mode de réalisation visible sur la figure 13, la paroi supérieure 26 comprend une ouverture 74 fermée par une trappe 76. La trappe 76 représentée sur la figure 11 est agencée sensiblement au milieu de la paroi supérieure 26 (entre le bord d'attaque 20 et le bord de fuite 22). Selon un autre mode de réalisation visible sur la figure 15, la paroi supérieure 26 comprend deux ouvertures 74, 74' fermées par des trappes 76, 76'. Chaque ouverture 74, 74', et donc trappe 76, 76', est disposée au-dessus, c'est à dire en regard, d'un contenant étanche 58, 58', qui prend ici la forme d'un boîtier étanche 72, 72'. Ces trappes 76, 76' ont des dimensions inférieures aux dimensions de la trappe 76 de la figure 11. Selon un autre mode de réalisation visible sur la figure 14, la paroi supérieure 26 comprend une première ouverture 74 fermée par une première trappe 76 et la paroi inférieure 28 comprend une deuxième ouverture 74' fermée par une deuxième trappe 76'. La première ouverture 74 et la première trappe 76 sont disposées sur une portion avant (à proximité du bord d'attaque 20) de la paroi supérieure 26, tandis que la deuxième ouverture 74' et la deuxième trappe 76' sont disposées sur une portion centrale de la paroi inférieure 28. La localisation des ouvertures 74, 74' et des trappes 76, 76' peut varier en fonction de l'emplacement des équipements 48, 50 du dispositif d'alimentation en hydrogène 44. Par exemple, une ou plusieurs ouvertures 74, 74' et une ou plusieurs trappes 76, 76' peuvent être présentent sur la paroi supérieure 26 et/ou sur la paroi inférieure 28. Les dimensions des ouvertures 74, 74' et des trappes 76, 76', ainsi que leur nombre, peuvent également varier en fonction des dimensions des contenants étanches 58, 58', des boîtiers étanches 72, 72' et des caissons 34.

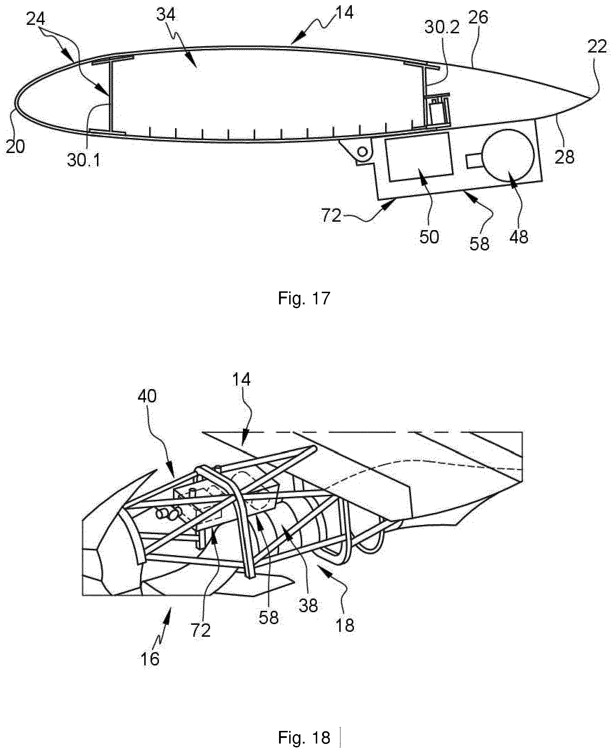

Selon un troisième agencement visible sur les figures 16 à 18, le boîtier étanche 72 ou au moins l'un des boîtiers étanches 72, 72' est positionné à l'extérieur de la voilure 14, notamment à l'intérieur de la structure secondaire 42 du mât 18. Selon une configuration, le boîtier étanche 72 ou au moins l'un des boîtiers étanches 72, 72' est positionné sous la voilure 14 et relié à cette dernière, comme illustré sur les figures 16 et 17, ou à la structure primaire 40 du mât 18 à l'intérieur de la structure secondaire 42, comme illustré sur la figure 18. Sur la figure 17, le boîtier étanche 72 est positionné sous la voilure 14, et relié à celle-ci au niveau de la paroi inférieure 28 et du longeron arrière 30.2. Bien entendu, le boîtier étanche 72 pourrait être positionné sous la voilure et fixé à cette dernière au niveau de la paroi inférieure 28, ou au niveau de la paroi inférieure et du longeron avant 30.1.

Le boîtier étanche 72 ou au moins un des boîtiers étanches 72, 72' est relié à au moins une structure de l'aéronef, comme la structure primaire 40 du mât 18 ou la structure 24 de la voilure 14 par exemple, par au moins un système de liaison 78.

Selon un mode de réalisation visible sur les figures 11 et 13, le système de liaison 78 comprend des première et deuxième articulations 78.1, 78.2 reliant une première face latérale du boîtier étanche 72 et le longeron arrière 30.2 et/ou la paroi inférieure 28 de la voilure 14 ainsi qu'une troisième articulation 78.3 reliant une deuxième face latérale du boîtier étanche 72 (opposée à la première face) et la paroi inférieure 28 de la voilure 14.

Selon ce mode de réalisation, chaque première, deuxième ou troisième articulation 78.1, 78.2, 78.3 comprend une chape 80 solidaire du boîtier étanche 72 ainsi qu'une aile 82 solidaire de la structure 24 de la voilure 14, la chape 80 et l'aile 82 étant reliées par un axe de pivotement. Selon un agencement, les axes de pivotement des première et deuxième articulations 78.1, 78.2 sont alignés et orientés selon une première direction, l'axe de pivotement de la troisième articulation 78.3 étant orienté selon une deuxième direction approximativement perpendiculaire à la première direction. Les axes de pivotement sont de préférence démontables pour pouvoir désolidariser le boîtier étanche 72 de la structure de l'aéronef à laquelle il est relié.

Bien entendu, l'invention n'est pas limitée à ces points de fixation pour le boîtier étanche 72 ou à ce mode de réalisation pour le système de liaison 78. Le boîtier étanche 72 pourrait être relié au longeron avant 30.1, comme illustré sur la figure 14, à la paroi supérieure 26, comme illustré sur les figures 14 et 15, ou uniquement à la paroi inférieure 28, ou à une ou plusieurs nervures 32. Selon une configuration, les boîtiers étanches 72, 72' peuvent être reliés au longeron avant 30.1, et/ou à la paroi supérieure 26, et/ou à la paroi inférieure 28, et/ou au longeron arrière 30.2, à une ou plusieurs nervures 32, les points de fixation pour les boîtiers étanches 72, 72' étant différents entre lesdits boîtiers. Par exemple, un premier boîtier étanche 72 peut être relié au longeron avant 30.1 et à la paroi supérieure 26, tandis qu'un deuxième boîtier étanche 72' est relié au longeron arrière 30.2 et à la paroi supérieure 26. Selon un autre exemple, un premier boîtier étanche 72 peut être relié au longeron avant 30.1 et à la paroi inférieure 28, tandis qu'un deuxième boîtier étanche 72' est relié au longeron arrière 30.2 et à la paroi inférieure 28.

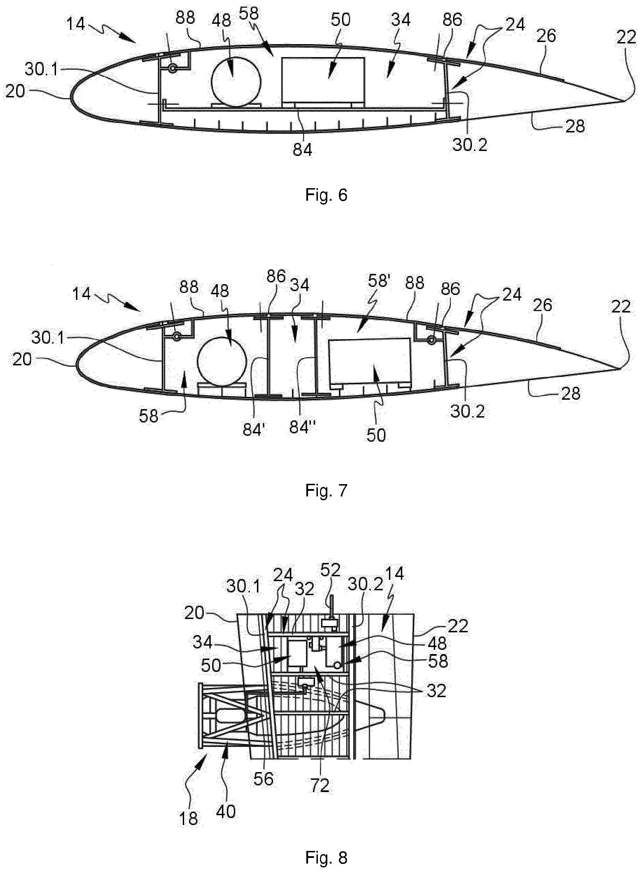

Selon un deuxième mode de réalisation visible sur les figures 6 et 7, le contenant étanche 58 ou au moins l'un des contenants étanches 58, 58' est au moins en partie délimité par au moins une structure de l'aéronef.

Selon un mode de réalisation, le contenant étanche 58 ou au moins l'un des contenants étanches 58, 58' est délimité par au moins une partie d'un caisson 34 de la voilure 14 et éventuellement au moins une cloison d'étanchéité 84, 84', 84".

Selon une configuration, le contenant étanche 58 ou au moins l'un des contenants étanches 58, 58' est délimité par les parois supérieure et inférieure 26, 28, les longerons avant et arrière 30.1, 30.2 et deux nervures 32 de la voilure 14 qui sont configurés et reliés de manière à obtenir un caisson 34 étanche. Selon cette configuration, le caisson 34 peut comprendre un plancher reliant les longerons avant et arrière 30.1, 30.2 et deux nervures 32, sensiblement horizontal en fonctionnement, sur lequel est fixé au moins un élément parmi la pompe 48 et l'échangeur thermique 50. En variante, la pompe 48 et/ou l'échangeur thermique 50 sont fixés sur la paroi inférieure 28.

Selon une autre configuration, le contenant étanche 58 ou au moins l'un des contenants étanches 58, 58' est délimité par la paroi supérieure ou inférieure 26, 28, les longerons avant et arrière 30.1, 30.2, deux nervures 32 ainsi qu'une cloison d'étanchéité 84 sensiblement horizontale. La paroi supérieure ou inférieure 26, 28, les longerons avant et arrière 30.1, 30.2, les deux nervures 32 et la cloison d'étanchéité 84 sont alors configurés et reliés de manière à former un contenant étanche 58 dans lequel sont positionnés la pompe 48 et l'échangeur thermique 50.

La paroi supérieure ou inférieure 26, 28 qui délimite le contenant étanche 58 peut comprendre une ouverture 86 fermée de manière étanche par une trappe 88. La trappe 88 est fixée, notamment boulonnée, sur la paroi supérieure ou inférieure 26, 28. La trappe 88 est ainsi structurelle. La trappe 88 est également démontable. Plus précisément, la trappe 88 est articulée via des chapes rotulées, afin de permettre l'ouverture de la trappe 88 lorsque les fixations (boulons) sont enlevées. La trappe 88 comporte, par exemple, deux chapes, entre lesquelles est disposée une rotule fixée à un longeron avant ou arrière 30.1, 30.2, ou à une nervure 32. La trappe 88 est articulée via les chapes rotulées avec un jeu, de manière à permettre un appui de la trappe 88 sur chacun de ses côtés lors de la fixation de cette dernière à la paroi supérieure ou inférieure 26, 28 (i.e. lors du boulonnage). Les chapes de la trappe 88 sont mises en attente, et sont utilisées uniquement pour l'ouverture de la trappe 88. Les chapes de la trappe 88 ne sont donc pas utilisées lorsque la trappe 88 est boulonnée sur la paroi supérieure ou inférieure 26, 28.

Selon une autre configuration visible sur la figure 7, un premier contenant étanche 58 est délimité par les parois supérieure et inférieure 26, 28, le longeron avant 30.1, deux nervures 32 ainsi qu'une première cloison d'étanchéité 84' sensiblement parallèle au longeron avant 30.1. Les parois supérieure et inférieure 26, 28, le longeron avant 30.1, les deux nervures 32 et la première cloison d'étanchéité 84' sont alors configurés et reliés de manière à former un premier contenant étanche 58. Un deuxième contenant étanche 58' est délimité par les parois supérieure et inférieure 26, 28, le longeron arrière 30.2, deux nervures 32 ainsi qu'une deuxième cloison d'étanchéité 84" sensiblement parallèle au longeron arrière 30.2. Les parois supérieure et inférieure 26, 28, le longeron arrière 30.2, les deux nervures 32 et la deuxième cloison d'étanchéité 84" sont alors configurés et reliés de manière à former un deuxième contenant étanche 58'. Les première et deuxième cloisons d'étanchéité 84', 84" sont positionnées entre la même paire de nervures 32. Selon cette configuration, la pompe 48 est positionnée dans le premier contenant étanche 58 et l'échangeur thermique 50 est positionné dans le deuxième contenant étanche 58'.

Au moins une paroi parmi les parois supérieure et inférieure 26, 28 comprend, au droit d'au moins la pompe 48 ou l'échangeur thermique 50, une ouverture 86 obturée de manière étanche par une trappe 88 démontable. Sur la figure 7, la paroi supérieure 26 comprend une ouverture 86 obturée par une trappe 88 structurelle au droit de la pompe 48, et une ouverture 86 obturée par une autre trappe 88 structurelle au droit de l'échangeur thermique 50.

Selon un mode de réalisation, au moins l'un des premier et deuxième contenants étanches 58, 58' comprend un plancher sur lequel est fixé l'échangeur thermique 50 ou la pompe 48.

D'autres solutions sont envisageables pour cloisonner au moins un caisson 34 de la voilure 14 afin d'obtenir au moins un contenant étanche 58, 58'.

Bien entendu, l'invention n'est pas limitée aux modes de réalisation précédemment décrits pour le contenant étanche 58, 58' ou le dispositif d'alimentation en hydrogène 44. Quel que soit le mode de réalisation, l'aéronef 10 comprend :
a. au moins un moteur à hydrogène 38,
b. au moins un dispositif d'alimentation en hydrogène 44 qui comporte :
   i. au moins un réservoir d'hydrogène 46,
   ii. au moins un équipement 48, 50, comme une pompe 48 ou un échangeur thermique 50 par exemple, traversé par l'hydrogène et positionné entre le réservoir d'hydrogène 46 et le moteur à hydrogène 38,
c. au moins un contenant étanche 58 à l'air extérieur, dans lequel est positionné l'équipement du dispositif d'alimentation en hydrogène.

Le contenant étanche 58 renferme avantageusement une faible teneur en oxygène. Par faible teneur en oxygène, on entend que la concentration en oxygène est insuffisante pour provoquer une explosion ou une inflammation de l'hydrogène. Cette faible teneur en oxygène peut être obtenue en inertant ou en tirant au vide l'intérieur du contenant étanche 58.

Par équipement, on entend un élément différent d'un conduit, configuré pour modifier au moins une caractéristique de l'hydrogène, comme la pression ou la température par exemple.

Selon une configuration, un même aéronef peut comprendre au moins un contenant étanche 58 sous la forme d'un boîtier étanche 72 distinct de la structure de l'aéronef et au moins un contenant étanche 58 délimité au moins partiellement par une structure de l'aéronef.

L'invention permet d'obtenir une installation d'hydrogène sûre en utilisant des équipements existants.

## Revendications

1. Aéronef comprenant au moins un moteur à hydrogène (38) ainsi qu'au moins un dispositif d'alimentation en hydrogène (44) comportant au moins un réservoir d'hydrogène (46) et au moins un équipement (48, 50) traversé par l'hydrogène et positionné entre le réservoir d'hydrogène (46) et le moteur à hydrogène (38), l'aéronef comprenant au moins un contenant étanche (58, 58') à l'air extérieur audit contenant, dans lequel est positionné ledit au moins un équipement (48, 50) du dispositif d'alimentation en hydrogène (44), **caractérisé en ce que** le dispositif d'alimentation en hydrogène (44) comprend au moins un système de raccordement démontable en amont ou en aval du contenant étanche (58, 58'), et **en ce que** ledit au moins un contenant étanche (58, 58') comprend au moins un capteur d'oxygène (68) configuré pour détecter une présence d'oxygène ou une concentration donnée d'oxygène à l'intérieur dudit contenant étanche (58, 58') et au moins un système d'extraction (70) configuré pour extraire de l'oxygène présent dans ledit contenant étanche (58, 58').

2. Aéronef selon la revendication précédente, **caractérisé en ce que** ledit au moins un contenant étanche (58, 58') comprend au moins un raccord (66) configuré pour connecter un appareil d'injection d'un gaz inerte.

3. Aéronef selon la revendication 1, **caractérisé en ce que** ledit au moins un contenant étanche (58, 58') comprend au moins un raccord (66) configuré pour connecter un appareil de tirage au vide.

4. Aéronef selon l'une des revendications précédentes, **caractérisé en ce que** ledit au moins un contenant étanche (58, 58') comprend au moins un capteur d'hydrogène (68') configuré pour détecter une présence d'hydrogène ou une concentration donnée d'hydrogène à l'intérieur dudit contenant étanche (58, 58').

5. Aéronef selon l'une des revendications précédentes, **caractérisé en ce que** ledit au moins un contenant étanche (58, 58') comprend au moins un système d'extraction (70') configuré pour extraire de l'hydrogène présent dans ledit contenant étanche (58, 58').

6. Aéronef selon l'une des revendications précédentes, **caractérisé en ce que** le dispositif d'alimentation en hydrogène (44) comprend au moins une vanne (64, 64, 64") en amont ou en aval du contenant étanche (58, 58').

7. Aéronef selon l'une des revendications précédentes, comprenant au moins une structure, et **caractérisé en ce que** ledit au moins un contenant étanche (58, 58') est un boîtier étanche (72) distinct de ladite structure de l'aéronef et **en ce que** l'aéronef comprend au moins un système de liaison (78) reliant le boîtier étanche (72) et ladite structure de l'aéronef.

8. Aéronef selon la revendication précédente, **caractérisé en ce que** l'aéronef comprend une voilure (14) présentant plusieurs caissons (34) et **en ce que** ledit boîtier étanche (72, 72') est positionné dans un des caissons (34) de la voilure (14).

9. Aéronef selon l'une des revendications 1 à 6, comprenant au moins une structure, et **caractérisé en ce que** ledit au moins un contenant étanche (58, 58') est au moins en partie délimité par ladite structure de l'aéronef.

10. Aéronef selon la revendication précédente, **caractérisé en ce que** l'aéronef comprend une voilure (14) présentant plusieurs caissons (34) et **en ce que** ledit au moins un contenant étanche (58, 58') est délimité par au moins une partie d'un des caissons (34) de la voilure (14) et au moins une cloison d'étanchéité (84, 84', 84").

11. Aéronef selon la revendication 8 ou 10, **caractérisé en ce que** la voilure (14) comprend des parois supérieure et inférieure (26, 28), des longerons avant et arrière (30.1, 30.2) ainsi que des nervures (32) délimitant les caissons (34) de la voilure (14) et **en ce qu'**au moins une paroi parmi les parois supérieure et inférieure (26, 28) comprend, au droit d'au moins un équipement (48, 50) ou d'au moins un boîtier étanche (72, 72'), une ouverture (74, 74', 86) obturée de manière étanche par une trappe (76, 76', 88) démontable.

12. Aéronef selon l'une des revendications précédentes, **caractérisé en ce que** le au moins un équipement (48, 50) du dispositif d'alimentation en hydrogène (44) est une pompe (48) ou un échangeur thermique (50).

## Patentansprüche

1. Luftfahrzeug, das mindestens einen Wasserstoffmotor (38) sowie mindestens eine Vorrichtung zur Wasserstoffversorgung (44) umfasst, die mindestens einen Wasserstofftank (46) und mindestens ein Ausrüstungsteil (48, 50) enthält, das von dem Wasserstoff durchquert wird und zwischen dem Wasserstofftank (46) und dem Wasserstoffmotor (38) positioniert ist, wobei das Luftfahrzeug mindestens einen Behälter (58, 58') umfasst, der gegenüber der Außenluft luftdicht ist und in dem das mindestens eine Ausrüstungsteil (48, 50) der Vorrichtung zur Wasserstoffversorgung (44) positioniert ist, **dadurch gekennzeichnet, dass** die Vorrichtung zur Wasserstoffversorgung (44) mindestens ein abnehmbares Anschlusssystem vor oder hinter dem dichten Behälter (58, 58') umfasst und dass der mindestens eine dichte Behälter (58, 58') mindestens einen Sauerstoffsensor (68) umfasst, der so konfiguriert ist, dass er das Vorhandensein von Sauerstoff oder eine bestimmte Sauerstoffkonzentration im Inneren des dichten Behälters (58, 58') erfasst, und mindestens ein Extraktionssystem (70), das so konfiguriert ist, dass es den in dem dichten Behälter (58, 58') vorhandenen Sauerstoff extrahiert.

2. Luftfahrzeug nach dem vorhergehenden Anspruch, **dadurch gekennzeichnet, dass** der mindestens eine dichte Behälter (58, 58') mindestens einen Anschluss (66) umfasst, der so konfiguriert ist, dass er ein Inertgas-Injektionsgerät anschließt.

3. Luftfahrzeug nach Anspruch 1, **dadurch gekennzeichnet, dass** der mindestens eine dichte Behälter (58, 58') mindestens einen Anschluss (66) umfasst, der so konfiguriert ist, dass er ein Vakuumziehgerät anschließt.

4. Luftfahrzeug nach einem der vorhergehenden Ansprüche, **dadurch gekennzeichnet, dass** der mindestens eine dichte Behälter (58, 58') mindestens einen Wasserstoffsensor (68') umfasst, der so konfiguriert ist, dass er das Vorhandensein von Wasserstoff oder eine bestimmte Wasserstoffkonzentration im Inneren des dichten Behälters (58, 58') erfasst.

5. Luftfahrzeug nach einem der vorhergehenden Ansprüche, **dadurch gekennzeichnet, dass** der mindestens eine dichte Behälter (58, 58') mindestens ein Extraktionssystem (70') umfasst, das so konfiguriert ist, dass es in dem dichten Behälter (58, 58') vorhandenen Wasserstoff extrahiert.

6. Luftfahrzeug nach einem der vorhergehenden Ansprüche, **dadurch gekennzeichnet, dass** die Vorrichtung zur Wasserstoffversorgung (44) mindestens ein Ventil (64, 64', 64") vor oder hinter dem dichten Behälter (58, 58') umfasst.

7. Luftfahrzeug nach einem der vorhergehenden Ansprüche, umfassend mindestens eine Struktur, und **dadurch gekennzeichnet, dass** der mindestens eine dichte Behälter (58, 58') ein von der Struktur des Luftfahrzeugs getrenntes dichtes Gehäuse (72) ist und dass das Luftfahrzeug mindestens ein Verbindungssystem (78) umfasst, das das dichte Gehäuse (72) und die Struktur des Luftfahrzeugs verbindet.

8. Luftfahrzeug nach dem vorhergehenden Anspruch, **dadurch gekennzeichnet, dass** das Luftfahrzeug eine Tragfläche (14), die mehrere Kästen (34) aufweist, umfasst und dass das dichte Gehäuse (72, 72') in einem der Kästen (34) der Tragfläche (14) positioniert ist.

9. Luftfahrzeug nach einem der Ansprüche 1 bis 6, das mindestens eine Struktur umfasst und **dadurch gekennzeichnet ist, dass** der mindestens eine dichte Behälter (58, 58') mindestens teilweise durch die Struktur des Luftfahrzeugs begrenzt ist.

10. Luftfahrzeug nach dem vorhergehenden Anspruch, **dadurch gekennzeichnet, dass** das Luftfahrzeug eine Tragfläche (14), die mehrere Kästen (34) aufweist, umfasst und dass der mindestens eine dichte Behälter (58, 58') durch mindestens einen Teil eines der Kästen (34) der Tragfläche (14) und mindestens eine Dichtwand (84, 84', 84") begrenzt ist.

11. Luftfahrzeug nach Anspruch 8 oder 10, **dadurch gekennzeichnet, dass** die Tragfläche (14) obere und untere Wände (26, 28), vordere und hintere Längsträger (30.1, 30.2) sowie Rippen (32) umfasst, die die Kästen (34) der Tragfläche (14) begrenzen, und dass mindestens eine der oberen und unteren Wände (26, 28) direkt unter mindestens einem Ausrüstungsteil (48, 50) oder mindestens einem dichten Gehäuse (72, 72') eine Öffnung (74, 74', 86) umfasst, die durch eine abnehmbare Klappe (76, 76', 88) dicht verschlossen ist.

12. Luftfahrzeug nach einem der vorhergehenden Ansprüche, **dadurch gekennzeichnet, dass** das mindestens eine Ausrüstungsteil (48, 50) der Vorrichtung zur Wasserstoffversorgung (44) eine Pumpe (48) oder ein Wärmetauscher (50) ist.

## Claims

1. Aircraft comprising at least one hydrogen engine (38) and at least one hydrogen supply device (44) comprising at least one hydrogen tank (46) and at least one item of equipment (48, 50) through which the hydrogen flows and which is positioned between the hydrogen tank (46) and the hydrogen engine (38), the aircraft comprising at least one sealed container (58, 58') sealed from the air outside said container, in which said at least one item of equipment (48, 50) of the hydrogen supply device (44) is positioned, **characterized in that** the hydrogen supply device (44) comprises at least one detachable connection system upstream or downstream of the sealed container (58, 58'), and **in that** said at least one sealed container (58, 58') comprises at least one oxygen sensor (68) configured to detect the presence of oxygen or a given concentration of oxygen inside said sealed container (58, 58') and at least one extraction system (70) configured to extract oxygen present in said sealed container (58, 58').

2. Aircraft according to the preceding claim, **characterized in that** said at least one sealed container (58, 58') comprises at least one connector (66) configured to connect an apparatus for injecting an inert gas.

3. Aircraft according to Claim 1, **characterized in that** said at least one sealed container (58, 58') comprises at least one connector (66) configured to connect an evacuation apparatus.

4. Aircraft according to one of the preceding claims, **characterized in that** said at least one sealed container (58, 58') comprises at least one hydrogen sensor (68') configured to detect the presence of hydrogen or a given concentration of hydrogen inside said sealed container (58, 58').

5. Aircraft according to one of the preceding claims, **characterized in that** said at least one sealed container (58, 58') comprises at least one extraction system (70') configured to extract hydrogen present in said sealed container (58, 58').

6. Aircraft according to one of the preceding claims, **characterized in that** the hydrogen supply device (44) comprises at least one valve (64, 64', 64") upstream or downstream of the sealed container (58, 58').

7. Aircraft according to one of the preceding claims, comprising at least one structure, and **characterized in that** said at least one sealed container (58, 58') is a sealed casing (72) separate from said structure of the aircraft, and **in that** the aircraft comprises at least one linkage system (78) connecting the sealed casing (72) and said structure of the aircraft.

8. Aircraft according to the preceding claim, **characterized in that** the aircraft comprises a wing (14) having a plurality of boxes (34), and **in that** said sealed casing (72, 72') is positioned in one of the boxes (34) of the wing (14).

9. Aircraft according to one of Claims 1 to 6, comprising at least one structure, and **characterized in that** said at least one sealed container (58, 58') is at least partly demarcated by said structure of the aircraft.

10. Aircraft according to the preceding claim, **characterized in that** the aircraft comprises a wing (14) having a plurality of boxes (34), and **in that** said at least one sealed container (58, 58') is demarcated by at least part of one of the boxes (34) of the wing (14) and at least one sealing bulkhead (84, 84', 84").

11. Aircraft according to Claim 8 or 10, **characterized in that** the wing (14) comprises upper and lower walls (26, 28), front and rear spars (30.1, 30.2) and ribs (32) demarcating the boxes (34) of the wing (14), and **in that** at least one wall from among the upper and lower walls (26, 28) comprises, in line with at least one item of equipment (48, 50) or at least one sealed casing (72, 72'), an opening (74, 74', 86) sealingly closed by a detachable hatch (76, 76', 88).

12. Aircraft according to one of the preceding claims, **characterized in that** the at least one item of equipment (48, 50) of the hydrogen supply device (44) is a pump (48) or a heat exchanger (50).
